# EUROPEAN PATENT APPLICATION

(11) **EP 3 995 006 A1**
(43) Date of publication of application: **11.05.2022**
(21) Application number: 19936514.9
(22) Date of filing: 27.08.2019
(51) Int. Cl.: A24F 40/46, A24F 40/00

(54) **VAPORIZATION DEVICE**

(30) Priority: 03.07.2019 CN 201910601402; 03.07.2019 CN 201910596521
(71) Applicant: Shenzhen Relx Technology Co., Ltd., Shenzhen City, Guangdong Province 518108 (CN)
(72) Inventor: FU, Yao, Shenzhen, Guangdong 518055 (CN); YANG, Zugang, Shenzhen, Guangdong 518055 (CN); ZHANG, Jin, Shenzhen, Guangdong 518055 (CN); FENG, Shuting, Shenzhen, Guangdong 518055 (CN)
(74) Representative: Klunker IP Patentanwälte PartG mbB
(86) International application number: PCT/CN2019/102721
(87) International publication number: WO 2021/000399

(57) **Abstract**

The present application relates to a vaporization device. The proposed vaporization device includes a heating component base, a heating component top cap, and a heating component disposed between the heating component base and the heating component top cap. The housing and the heating component top cap define a storage compartment, and the heating component base and the heating component top cap define a vaporization chamber. A first part of the heating component is located in the vaporization chamber, and a second part of the heating component is exposed in the storage compartment.

## Description

### BACKGROUND OF THE INVENTION

### 1. Field of the Invention

The present invention generally relates to an electronic device, and in particular, to a vaporization device for providing inhalable aerosol.

### 2. Description of the Related Art

An electronic cigarette is an electronic product that heats a volatile solution and vaporizes the solution to generate aerosol for a user to inhale. In recent years, major manufacturers begin to produce various electronic cigarette products. Generally, an electronic cigarette product includes a housing, an e-liquid storage chamber, a vaporization chamber, a heating component, an air inlet, an airflow channel, an air outlet, a power supply device, a sensing device, and a control device. The e-liquid storage chamber is configured to store a volatile solution, and the heating component is configured to heat and vaporize the volatile solution to generate aerosol. The air inlet is in communication with the vaporization chamber, and air is supplied to the heating component when a user inhales. The aerosol generated by the heating component is first generated in the vaporization chamber, then flows through the airflow channel and the air outlet, and is finally inhaled by the user. The power supply device supplies power required by the heating component, and the control device controls a heating time of the heating component based on an inhalation action of the user detected by the sensing device. The housing wraps each of the foregoing components.

The existing electronic cigarette products have different defects. For example, for the electronic cigarette products in the prior art, in order to reduce the number of components, poor component yield may be caused. For the electronic cigarette products in the prior art, in order to reduce the number of components, the costs of manufacturing the component may be increased. In addition, without considering the high temperature problem of the aerosol, the electronic cigarette products in the prior art may cause the potential crisis of user burns.

Therefore, the present disclosure proposes a vaporization device that can resolve the foregoing problem.

### SUMMARY OF THE INVENTION

A vaporization device is provided. The proposed vaporization device includes a heating component base, a heating component top cap, and a heating component disposed between the heating component base and the heating component top cap. The housing and the heating component top cap define a storage compartment, and the heating component base and the heating component top cap define a vaporization chamber. A first part of the heating component is located in the vaporization chamber, and a second part of the heating component is exposed in the storage compartment.

A vaporization device is provided. The proposed vaporization device includes a heating component top cap, a heating component base, and a heating component. The heating component top cap has a first part and a second part, the width of the first part being greater than the width of the second part. The first part of the heating component is disposed between the heating component base and the heating component top cap, and the second part of the heating component is exposed by the heating component base and the heating component top cap.

### BRIEF DESCRIPTION OF THE DRAWINGS

Aspects of some embodiments of the present disclosure are readily understood from the following detailed description when read with the accompanying figures. It is noted that various structures may not be drawn to scale, and dimensions of the various structures may be arbitrarily increased or reduced for clarity of discussion.
FIG. 1 is a schematic diagram of a vaporization device according to some embodiments of the present invention.
FIG. 2A and FIG. 2B are each an exploded view of a part of a vaporization device according to some embodiments of the present invention.
FIG. 3A and FIG. 3B are each an exploded view of a part of a vaporization device according to some embodiments of the present invention.
FIG. 4A and FIG. 4B are each a sectional view of a cartridge according to some embodiments of the present invention.

Common reference numerals are used throughout the drawings and the detailed description to indicate the same or similar components. The present invention will be clearer from the following detailed description taken in conjunction with the accompanying drawings.

### PREFERRED EMBODIMENT OF THE PRESENT INVENTION

The following disclosure provides many different embodiments, or examples, for implementing different features of the provided subject matter. Specific examples of components and arrangements are described below. These are, of course, merely examples and are not intended to be limiting. In the present invention, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Embodiments of the present invention are discussed in detail below. It should be understood, however, that the present invention provides many applicable concepts that may be implemented in a wide variety of specific contexts. The specific embodiments discussed are merely illustrative and do not limit the scope of the present invention.

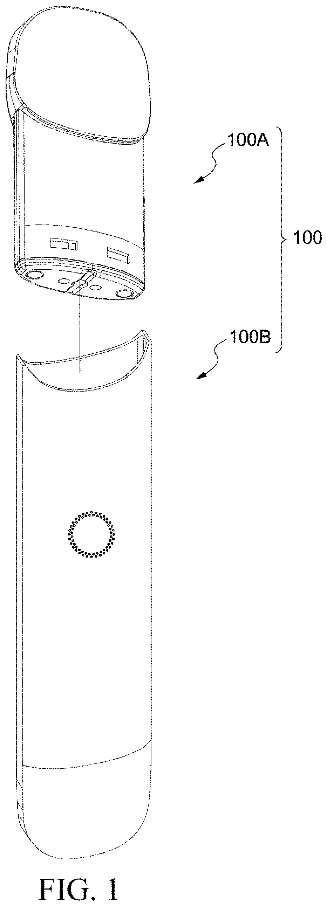

FIG. 1 is a schematic diagram of a vaporization device according to some embodiments of the present invention.

A vaporization device 100 may include a cartridge 100A and a body 100B. In some embodiments, the cartridge 100A and the body 100B may be designed as a whole. In some embodiments, the cartridge 100A and the body 100B may be designed as two separate components. In some embodiments, the cartridge 100A may be designed to be removably engaged with the body 100B. In some embodiments, when the cartridge 100A and the body 100B are combined, a part of the cartridge 100A is received in the body 100B.

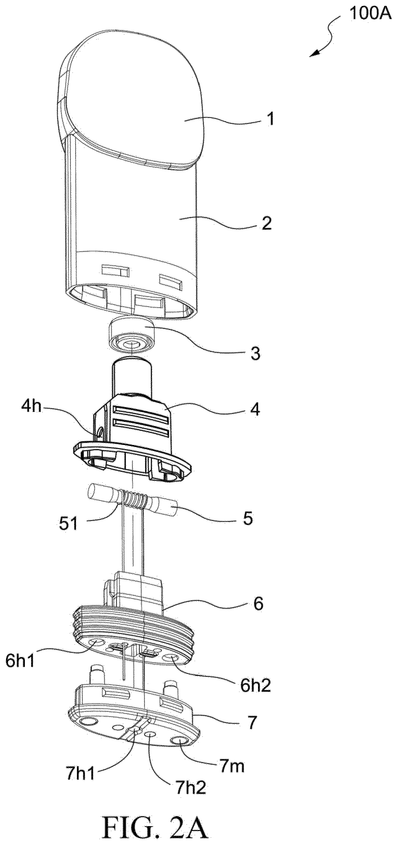

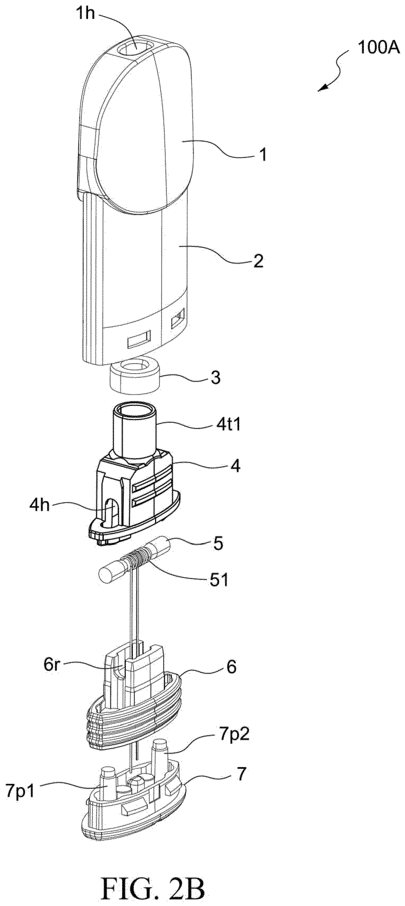

FIG. 2A and FIG. 2B are each an exploded view of a part of a vaporization device according to some embodiments of the present invention.

A cartridge 100A includes a mouthpiece cap 1, a cartridge housing 2, a seal member 3, a heating component top cap 4, a heating component 5, a heating component base 6, and a cartridge base 7.

In some embodiments, the mouthpiece cap 1 and the cartridge housing 2 may be two separate components. In some embodiments, the mouthpiece cap 1 and the cartridge housing 2 may be integrally formed. In some embodiments, the mouthpiece cap 1 and the cartridge housing 2 may be integrally formed using a double injection mold.

The mouthpiece cap 1 has a hole 1h. The hole 1h forms a part of an aerosol channel. The aerosol generated by the vaporization device 100 may be inhaled by a user via the hole 1h.

The seal member 3 may be sleeved on a tube 4t1 of the heating component top cap 4. The seal member 3 has a similar shape as the tube 4t1 of the heating component top cap 4. In some embodiments, the seal member 3 has an annular shape. In some embodiments, the seal member 3 may have other shapes. The seal member 3 may have flexibility. The seal member 3 may have ductility. In some embodiments, the material of the seal member 3 may include silica gel.

In some embodiments, the seal member 3 may have a hardness between 20 and 40. In some embodiments, the seal member 3 may have a hardness between 40 and 60. In some embodiments, the seal member 3 may have a hardness between 60 and 75. The hardness unit used herein is the shore hardness A (HA). In some embodiments, the hardness of the seal member 3 may not be limited to the foregoing range.

One side of the heating component top cap 4 has a hole 4h. The other side of the heating component top cap 4 also has a hole. The heating component top cap 4 may include plastic materials. In some embodiments, the heating component top cap 4 may include materials such as polypropylene (PP), high pressure polyethylene (LDPE), and high density polyethylene (HDPE). In some embodiments, the material of the heating component top cap 4 may include silica gel.

The heating component top cap 4 and the seal member 3 may be made of the same material. The heating component top cap 4 and the seal member 3 may be made of different materials. The heating component top cap 4 and the seal member 3 may include difference materials. In some embodiments, the hardness of the heating component top cap 4 may be greater than the hardness of the seal member 3. In some embodiments, the heating component top cap 4 may have a hardness between 65 and 75. In some embodiments, the heating component top cap 4 may have a hardness between 75 and 85. In some embodiments, the heating component top cap 4 may have a hardness between 85 and 90. In some embodiments, the hardness of the heating component top cap 4 may not be limited to the foregoing range.

Both ends of the heating component 5 may extend beyond the hole 4h. Both ends of the heating component 5 may be exposed from the hole 4h.

In some embodiments, the material of the heating component 5 may include cotton core. In some embodiments, the material of the heating component 5 may include non-woven fabrics. In some embodiments, the material of the heating component 5 may include ceramics. In some embodiments, the heating component 5 may include a composition of cotton core, non-woven fabrics or ceramics.

The heating component 5 includes a heating wire 51. The heating wire 51 may be wound around a part of the heating component 5. The heating wire 51 may be wound around a central part of the heating component 5. The heating wire 51 is supplied with power, so that the vaporization device 100 may raise the temperature of the heating component 5.

The heating wire 51 may include the metallic material. In some embodiments, the heating wire 51 may include silver. In some embodiments, the heating wire 51 may include platinum. In some embodiments, the heating wire 51 may include palladium. In some embodiments, the heating wire 51 may include nickel. In some embodiments, the heating wire 51 may include the nickel alloy material.

The heating component base 6 includes a groove 6r. The heating component 5 may be disposed on the groove 6r. The heating component 5 may be supported by the groove 6r. The heating component 5 may be fixed between the heating component top cap 4 and the groove 6r. The heating component base 6 includes holes 6h1 and 6h2. The holes 6h1 and 6h2 extend into the heating component base 6. The holes 6h1 and 6h2 penetrate the heating component base 6.

The cartridge base 7 includes pillar structures 7p1 and 7p2. The pillar structure 7p1 may extend into the hole 6h1. The pillar structure 7p1 may be mechanically coupled to the hole 6h1. The pillar structure 7p2 may extend into the hole 6h2. The pillar structure 7p2 may be mechanically coupled to the hole 6h2. The cartridge base 7 may be fixed to the heating component base 6 through the pillar structures 7p1 and 7p2. The cartridge base 7 includes a hole 7h1 and a hole 7h2. The hole 7h1 forms a part of an aerosol channel. The heating wire 51 extends through the hole 7h2 to form an electrical connection with a conductive component 11 disposed in the body 100B. The cartridge base 7 includes an adsorption component 7m. The adsorption component 7m may include the metallic material. The adsorption component 7m may be magnetically coupled to a magnetic component 12 disposed in the body 100B. The adsorption component 7m may be removably coupled to a magnetic component 12 disposed in the body 100B.

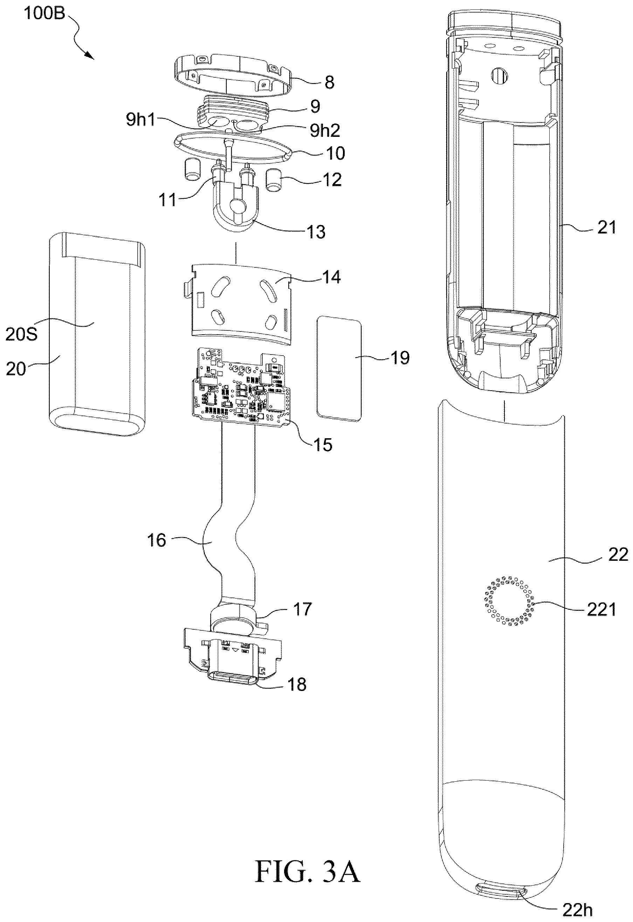

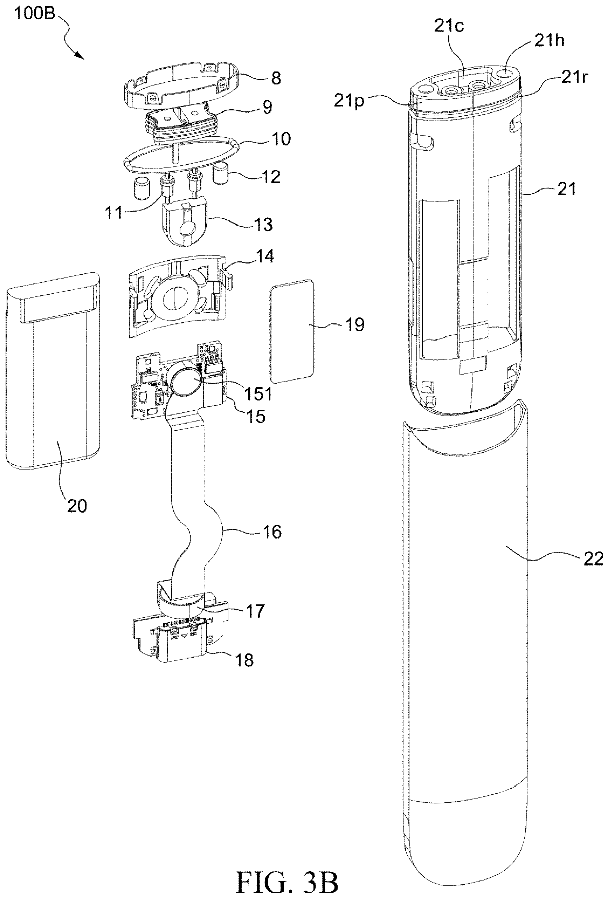

FIG. 3A and FIG. 3B are each an exploded view of a part of a vaporization device according to some embodiments of the present invention.

The body 100B includes a frame 8, a sensor upper cap 9, a seal member 10, a conductive component 11, a magnetic component 12, a sensor 13, a circuit board bracket 14, a circuit board 15, a flat cable 16, a vibrator 17, a charging component 18, a buffer component 19, a power supply component 20, a power supply component bracket 21, and a body housing 22.

The frame 8 is fixed to an upper periphery 21p of the power supply component bracket 21. In some embodiments, the frame 8 may include the plastic material. In some embodiments, the frame 8 may include the metal material. The sensor upper cap 9 is disposed in a cavity 21c of the power supply component bracket 21. The seal member 10 is disposed in a groove 21r of the power supply component bracket 21. The magnetic component 12 is disposed in a hole 21h of the power supply component bracket 21. In some embodiments, the magnetic component 12 may be a permanent magnet. In some embodiments, the magnetic component 12 may be an electromagnet. In some embodiments, the magnetic component 12 is magnetic. In some embodiments, the magnetic component 12 is magnetic only after being electrified.

The sensor upper cap 9 has holes 9h1 and 9h2. The hole 9h1 may accommodate the conductive component 11. The hole 9h2 is in fluid communication with the sensor 13. The sensor 13 may detect airflow generation through the hole 9h2. The sensor 13 may detect pressure change through the hole 9h2. The sensor 13 may detect sound waves through the hole 9h2.

The circuit board 15 is disposed between the circuit board bracket 14 and the power supply component bracket 21. The circuit board 15 includes a controller 151. The controller 151 may be a microprocessor. The controller 151 may be a programmable integrated circuit. The controller 151 may be a programmable logic circuit. In some embodiments, operation logic in the controller 151 cannot be changed after the controller 151 is manufactured. In some embodiments, the operation logic in the controller 151 may be changed programmatically after the controller 151 is manufactured.

The circuit board 15 may also include a memory (not shown). In some embodiments, the memory may be integrated into the controller 151. In some embodiments, the memory may be disposed separately from the controller 151.

The controller 151 may be electrically connected to the sensor 13. The controller 151 may be electrically connected to the conductive component 11. The controller 151 may be electrically connected to the power supply component 20. When the sensor 13 detects airflow, the controller 151 may control the power supply component 20 to output power to the conductive component 11. When the sensor 13 detects an atmospheric pressure change, the controller 151 may control the power supply component 20 to output power to the conductive component 11. When the sensor 13 detects a negative pressure, the controller 151 may control the power supply component 20 to output power to the conductive component 11. When the controller 151 determines that an atmospheric pressure detected by the sensor 13 is lower than a threshold value, the controller 151 may control the power supply component 20 to output power to the conductive component 11. When the sensor 13 detects an acoustic wave, the controller 151 may control the power supply component 20 to output power to the conductive component 11. When the controller 151 determines that an amplitude of an acoustic wave detected by the sensor 13 is higher than a threshold value, the controller 151 may control the power supply component 20 to output power to the conductive component 11.

The vibrator 17 may be electrically connected to the controller 151. In some embodiments, the vibrator 17 is electrically connected to the controller 151 on the circuit board 15 via the flat cable 16.

Based on different operating states of a vaporization device 100, the controller 151 may control the vibrator 17 to generate different somatosensory effects. In some embodiments, when the user inhales for more than a specific period of time, the controller 151 may control the vibrator 17 to generate vibration to remind the user to stop inhaling. In some embodiments, when the user charges the vaporization device 100, the controller 151 may control the vibrator 17 to generate vibration to indicate that the charging already starts. In some embodiments, when the charging of the vaporization device 100 is completed, the controller 151 may control the vibrator 17 to generate vibration to indicate that the charging is completed.

The charging component 18 is disposed on a bottom of the body housing 22. One end of the charging component 18 is exposed via a through hole 22h of the body housing 22. The power supply component 20 may be charged via the charging component 18. In some embodiments, the charging component 18 includes a USB interface. In some embodiments, the charging component 18 includes a USB type-C interface.

The power supply component 20 may be disposed in the power supply component bracket 21. The buffer component 19 may be disposed on a surface 20s of the power supply component 20. The buffer component 19 may be disposed between the power supply component 20 and the body housing 22. The buffer component 19 may be in direct contact with the surface 20s of the power supply component 20 and an inner wall of the body housing 22. Although not shown in the figure, an additional buffer component may be disposed between the power supply component 20 and the power supply component bracket 21.

In some embodiments, the power supply component 20 may be a battery. In some embodiments, the power supply component 20 may be a rechargeable battery. In some embodiments, the power supply component 20 may be a disposable battery.

The body housing 22 includes a light transmissive component 221. The light transmissive component 221 may include one or more holes penetrating through the body housing 22. In some embodiments, the light transmissive component 221 may be substantially circular. In some embodiments, the light transmissive component 221 may be substantially rectangular. In some embodiments, the light transmissive component 221 may be substantially triangular. In some embodiments, the light transmissive component 221 may have a symmetrical exterior. In some embodiments, the light transmissive component 221 may have an asymmetric exterior. Light emitted by one or more light-emitting components on the circuit board 15 is visible through the light transmissive component 221.

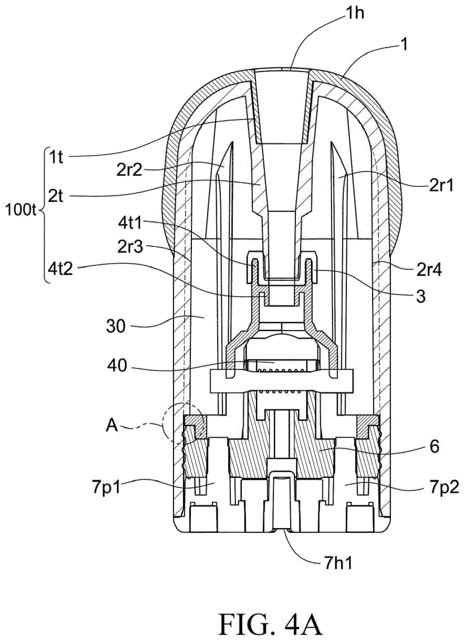

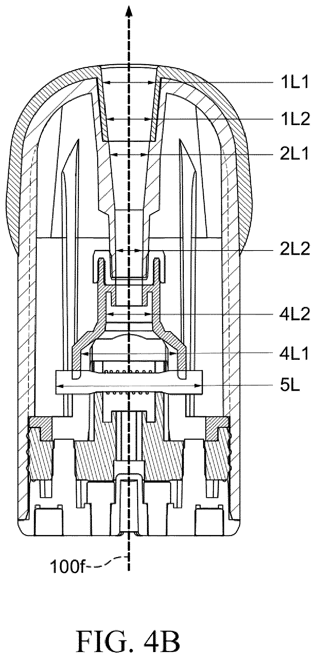

FIG. 4A and FIG. 4B are each a sectional view of a cartridge according to some embodiments of the present invention.

A cartridge housing 2 and a heating component top cap 4 define a storage compartment 30. The volatile material may be stored in the storage compartment 30. Volatile liquid may be stored in the storage compartment 30. The volatile material may be a kind of liquid. The volatile material may be a solution. In subsequent paragraphs of the present invention, the volatile material may also be referred to as e-liquid. The e-liquid is edible.

An inner wall of the cartridge housing 2 has ribs 2r1, 2r2, 2r3, and 2r4. The rib 2r1 is disposed apart from the rib 2r2. The rib 2r1 is disposed apart from the rib 2r4. The rib 2r2 is disposed apart from the rib 2r3. The ribs 2r1, 2r2, 2r3, and 2r4 may be disposed in parallel with each other. In some embodiments, the ribs 2r1, 2r2, 2r3, and 2r4 may be disposed in a non-parallel manner.

In some embodiments, the inner wall of the cartridge housing 2 may have more ribs. In some embodiments, the inner wall of the cartridge housing 2 may have fewer ribs. In some embodiments, the inner wall of the cartridge housing 2 may have a total of six ribs.

The ribs 2r1, 2r2, 2r3, and 2r4 extend toward the heating component top cap 4 from a part that is of the cartridge housing 2 and that is close to a hole 1h. One end of the ribs 2r1, 2r2, 2r3, and 2r4 is in direct contact with the heating component top cap 4. One end of the ribs 2r1, 2r2, 2r3, and 2r4 is pressed against a part of the heating component top cap 4. As shown in the dashed circle A in FIG. 4A, the rib 2r3 is pressed against a part of the heating component top cap 4. The ribs 2r1, 2r2, 2r3, and 2r4 may prevent the heating component top cap 4 from being separated from the heating component base 6.

The ribs 2r1, 2r2, 2r3, and 2r4 may strengthen the rigidity of the cartridge housing 2. The ribs 2r1, 2r2, 2r3, and 2r4 may prevent the cartridge housing 2 from being deformed by external force. The ribs 2r1, 2r2, 2r3, and 2r4 may prevent the e-liquid in the storage compartment 30 from overflowing by external force.

The heating component top cap 4 and the heating component base 6 define a vaporization chamber 40. The vaporization chamber 40 may be a cavity between the heating component top cap 4 and the heating component base 6.

The heating component 5 has the length of 5L. The vaporization chamber 40 has the maximum width 4L1. The length 5L of the heating component 5 is greater than the maximum width 4L1 of the vaporization chamber 40.

A part of the heating component 5 is disposed in the vaporization chamber 40. Both ends of the heating component 5 extend into the storage compartment 30 from a hole 4h of the heating component top cap 4. The heating component top cap 4 exposes the part of the heating component 5. The heating component top cap 4 exposes both ends of the heating component 5. Both ends of the heating component 5 are exposed in the storage compartment 30. The e-liquid in the storage compartment 30 may be adsorbed by the heating component 5 through both ends of the heating component 5. After the e-liquid adsorbed on the heating component 5 is heated by the heating wire 51, aerosol is generated in the vaporization chamber 40. The aerosol may be sucked by the user through an airflow channel lOOt formed by a tube 4t2, a tube 2t, and a tube 1t.

In some embodiments, the mouthpiece cap 1 and the cartridge housing 2 may be integrally formed. In this case, the tube 2t and the tube 1t are a same component.

The airflow channel lOOt formed by the tube 4t2, the tube 2t, and the tube 1t may have a smooth inner diameter. The inner diameter of the airflow channel 100t has no obvious segment gap at a junction of the tube 1t and the tube 2t. The inner diameter of the airflow channel lOOt has no obvious segment gap at a junction of the tube 2t and the tube 4t2. The inner diameter of the airflow channel 100t has no obvious interface at a junction of the tube 1t and the tube 2t. The inner diameter of the airflow channel lOOt has no obvious step at a junction of the tube 2t and the tube 4t2.

The airflow channel lOOt formed by the tube 4t2, the tube 2t, and the tube 1t may have a non-uniform inner diameter. For example, the tube 2t may have an inner diameter 2L1 and an inner diameter 2L2, the inner diameter 2L1 being greater than 2L2. The tube 1t has an inner diameter 1L1 and an inner diameter 1L2, the inner diameter 1L1 being greater than 1L2. In some embodiments, the airflow channel formed by the tube 4t2, the tube 2t, and the tube 1t may have a uniform inner diameter.

Referring to FIG. 4B, the heating component top cap 4 may have two parts. A part of the heating component top cap 4 has the relatively large width. An inner wall of the vaporization chamber 40 may have the non-uniform width. For example, the inner wall of the vaporization chamber 40 has the width of 4L2 and the maximum width of 4L1 due to the exterior of the heating component top cap 4. The width 4L2 is less than the width 4L1.

The seal member 3 is disposed between the tube 2t of the cartridge housing 2 and the tube 4t1 of the heating component top cap 4. The hardness of the seal member 3 may be less than the hardness of the cartridge housing 2. The hardness of the seal member 3 may be less than the hardness of the heating component top cap 4. The seal member 3 may increase the degree of tightness between the tube 2t and the tube 4t1. The seal member 3 may reduce requirements for a tolerance between the tube 2t and the tube 4t1. The seal member 3 may reduce the difficulty of manufacturing the cartridge housing 2 and the heating component top cap 4. The seal member 3 may prevent the cartridge housing 2 and the heating component top cap 4 from being damaged during the assembling. The seal member 3 may also prevent the e-liquid in the storage compartment 30 from being extracted from the hole 1h.

The tube 4t2 of the heating component top cap 4 may have an inner diameter less than that of the tube 4t1. The tube 4t2 of the heating component top cap 4 may have an outer diameter less than that of the tube 4t1. The tube 4t2 of the heating component top cap 4 extends into the vaporization chamber 40. The tube 4t2 of the heating component top cap 4 extends into the vaporization chamber 40. The tube 4t2 of the heating component top cap 4 extends toward a direction opposite to the hole 1h. The tube 4t2 may make the airflow channel closer to the heating component 5. The tube 4t2 may allow the aerosol generated in the vaporization chamber 40 to be completely discharged from the airflow channel. The tube 4t2 may prevent the aerosol generated in the vaporization chamber 40 from leaking into the storage compartment 30 from a gap between the seal member 3 and the heating component top cap 4.

Referring to FIG 4B, when the user inhales through the hole 1h, airflow 100f is generated in the cartridge 100A. A front section of the airflow 100f includes fresh air entering the vaporization chamber 40 through the hole 7h1 of the cartridge base 7. A rear section of the airflow 100f includes aerosol generated by the heating component 5. The fresh air enters the vaporization chamber 40 through the hole 7h1, and the aerosol generated by the heating component 5 is discharged from the hole 1h1 along the airflow channel 100t.

The airflow 100f generates a temperature change between the heating component 5 and the tube 4t2. Aerosol generated by the heating component 5 generates a temperature change before reaching the tube 4t2.

The non-uniform width of the inner wall of the vaporization chamber 40 may strengthen the temperature change of the airflow 100f. The non-uniform width of the inner wall of the vaporization chamber 40 may accelerate the temperature change of the airflow 100f. The temperature drops when the airflow 100f flows from the width 4L1 to 4L2. Compared with the vaporization chamber with the uniform inner wall width, when the airflow 100f flows from the width 4L1 to 4L2, the temperature decreases more greatly and drops faster. The width of the inner wall of the vaporization chamber 40 is adjusted to control the temperature of the aerosol inhaled by the user from the hole 1h. In some embodiments, the vaporization chamber 40 may also have substantially the same inner wall width.

After the airflow 100f enters the vaporization chamber 40 from the hole 7h1 and is heated by the heating component 5, a temperature rise Tr is generated. In some embodiments, the temperature rise Tr may be in a range of 200° to 220°. In some embodiments, the temperature rise Tr may be in a range of 220° to 240°. In some embodiments, the temperature rise Tr may be in a range of 240° to 260°. In some embodiments, the temperature rise Tr may be in a range of 260° to 280°. In some embodiments, the temperature rise Tr may be in a range of 280° to 300°. In some embodiments, the temperature rise Tr may be in a range of 300° to 320°. In some embodiments, the temperature rise Tr may be in a range of 200° to 320°.

The airflow flowing out of the vaporization chamber 40 may generate a temperature drop Tf before reaching the hole 1h. In some embodiments, the temperature drop Tf may be in a range of 145° to 165°. In some embodiments, the temperature drop Tf may be in a range of 165° to 185°. In some embodiments, the temperature drop Tf may be in a range of 205° to 225°. In some embodiments, the temperature drop Tf may be in a range of 225° to 245°. In some embodiments, the temperature drop Tf may be in a range of 245° to 265°. In some embodiments, the temperature drop Tf may be in a range of 145° to 265°.

The airflow channel lOOt may have a non-uniform inner diameter. The inner diameter of the airflow channel lOOt gradually increases toward the hole 1h from a position close to the heating module 5. A relatively large inner diameter close to the hole 1h may make a volume of the aerosol become larger.

The width of the inner wall of the vaporization chamber 40 and the width of the inner diameter of the airflow channel lOOt are adjusted to control the temperature of the aerosol inhaled by the user from the hole 1h. The width of the inner wall of the vaporization chamber 40 and the width of the inner diameter of the airflow channel lOOt are adjusted to control the volume of the aerosol inhaled by the user from the hole 1h.

Controlling the aerosol temperature may prevent users from being burned by the aerosol. Controlling the volume of aerosol may improve inhalation experience of the user.

In some embodiments, the aerosol inhaled by the user via the through hole 1h may have a temperature below 65°C. In some embodiments, the aerosol inhaled by the user via the through hole 1h may have a temperature below 55°C. In some embodiments, the aerosol inhaled by the user via the through hole 1h may have a temperature below 50°C. In some embodiments, the aerosol inhaled by the user via the through hole 1h may have a temperature below 45°C. In some embodiments, the aerosol inhaled by the user via the through hole 1h may have a temperature below 40°C. In some embodiments, the aerosol inhaled by the user via the through hole 1h may have a temperature below 30°C.

As used herein, the terms "approximately," "substantially," "substantial" and "about" are used to describe and account for small variations. When used in conjunction with an event or circumstance, the terms can refer to instances in which the event or circumstance occurs precisely as well as instances in which the event or circumstance occurs to a close approximation. As used herein with respect to a given value or range, the term "about" generally means in the range of ±10%, ±5%, ±1%, or ±0.5% of the given value or range. The range may be expressed herein as being from one endpoint to another endpoint or between two endpoints. Unless otherwise specified, all ranges disclosed herein include endpoints. The term "substantially coplanar" may refer to two surfaces within a few micrometers (µm) positioned along a same plane, for example, within 10 µm, 5 µm, 1 µm, or 0.5 µm positioned along a same plane. When reference is made to "substantially" the same numerical value or characteristic, the term may refer to a value within ±10%, ±5%, ±1%, or ±0.5% of the average of the values.

As used herein, the terms "approximately," "substantially," "substantial," and "about" are used to describe and explain small variations. When used in conjunction with an event or circumstance, the terms can refer to instances in which the event or circumstance occurs precisely as well as instances in which the event or circumstance occurs to a close approximation. For example, when used in conjunction with a numerical value, the terms can refer to a range of variation less than or equal to ±10% of that numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two values is less than or equal to ± 10% of an average of the values (for example, less than or equal to ±5%, less than or equal to ±4%, less than or equal to ±3%, less than equal to ±2%, less than or equal to ±1%, less than or equal to ±0.5%, less than or equal to ±0.1%, or less than or equal to ±0.05%), the two values may be considered to be "substantially" or "about" the same. For example, being "substantially" parallel may refer to an angular variation range of less than or equal to ±10° with respect to 0°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, being "substantially" perpendicular may refer to an angular variation range of less than or equal to ±10° with respect to 90°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

For example, if a displacement between two surfaces is equal to or less than 5 µm, equal to or less than 2 µm, equal to or less than 1 µm, or equal to or less than 0.5 µm, the two surfaces may be considered to be coplanar or substantially coplanar. If a displacement between any two points on a surface relative to a plane is equal to or less than 5 µm, equal to or less than 2 µm, equal to or less than 1 µm, or equal to or less than 0.5 µm, the surface may be considered to be flat or substantially flat.

As used herein, the terms "conductive," "electrically conductive" and "electrical conductivity" refer to an ability to transport an electric current. Electrically conductive materials typically indicate those materials that exhibit little or no opposition to the flow of an electric current. One measure of electrical conductivity is Siemens per meter (S/m). Typically, an electrically conductive material is one having a conductivity greater than approximately 10⁴ S/m, such as at least 10⁵ S/m or at least 10⁶ S/m. The electrical conductivity of a material can sometimes vary with temperature. Unless otherwise specified, the electrical conductivity of a material is measured at room temperature.

As used herein, the singular terms "a," "an", and "the" may include plural referents unless the context clearly dictates otherwise. In the description of some embodiments, components provided "on" or "above" another component may encompass a case in which a previous component is directly on a latter component (for example, in physical contact with the latter component), and a case in which one or more intermediate components are located between the previous component and the latter component.

As used herein, for ease of description, space-related terms such as "under", "below", "lower portion", "above", "upper portion", "lower portion", "left side", "right side", and the like may be used herein to describe a relationship between one component or feature and another component or feature as shown in the figures. In addition to orientation shown in the figures, space-related terms are intended to encompass different orientations of the device in use or operation. An apparatus may be oriented in other ways (rotated 90 degrees or at other orientations), and the space-related descriptors used herein may also be used for explanation accordingly. It should be understood that when a component is "connected" or "coupled" to another component, the component may be directly connected to or coupled to another component, or an intermediate component may exist.

As used in the present application, terms "approximately", "basically", "substantially", and "about" are used for describing and explaining a small variation. When being used in combination with an event or circumstance, the term may refer to a case in which the event or circumstance occurs precisely, and a case in which the event or circumstance occurs approximately. As used herein with respect to a given value or range, the term "about" generally means in the range of ±10%, ±5%, ±1%, or ±0.5% of the given value or range. The range may be indicated herein as from one endpoint to another endpoint or between two endpoints. Unless otherwise specified, all ranges disclosed herein include endpoints. The term "substantially coplanar" may refer to two surfaces within a few micrometers (µm) positioned along the same plane, for example, within 10 µm, within 5 µm, within 1 µm, or within 0.5 µm located along the same plane. When reference is made to "substantially" the same numerical value or characteristic, the term may refer to a value within ±10%, ±5%, ±1%, or ±0.5% of the average of the values.

Several embodiments of the present invention and features of details are briefly described above. The embodiments described in the present invention may be easily used as a basis for designing or modifying other processes and structures for realizing the same or similar objectives and/or obtaining the same or similar advantages introduced in the embodiments of the present invention. Such equivalent construction does not depart from the spirit and scope of the present invention, and various variations, replacements, and modifications can be made without departing from the spirit and scope of the present invention.

## Claims

1. A vaporization device, comprising:
a housing, a heating component top cap, a heating component base, and a heating component disposed between the heating component base and the heating component top cap, wherein
the housing and the heating component top cap define a storage compartment, and the heating component base and the heating component top cap define a vaporization chamber; and
a first part of the heating component is located in the vaporization chamber, and a second part of the heating component is exposed in the storage compartment.

2. The vaporization device according to claim 1, wherein an inner wall of the housing comprises a first rib and a second rib, a first interval between the first rib and the second rib, and the first rib is disposed parallel to the second rib.

3. The vaporization device according to claim 2, wherein one end of the first rib is in direct contact with the heating component top cap, and one end of the second rib is in direct contact with the heating component top cap.

4. The vaporization device according to claim 1, wherein the vaporization chamber has a first part and a second part, a width of the first part being greater than a width of the second part.

5. The vaporization device according to claim 4, wherein a distance between the heating component and the first part of the vaporization chamber is less than a distance between the heating component and the second part of the vaporization chamber.

6. The vaporization device according to claim 1, further comprising: a mouthpiece cap disposed on the housing, wherein the mouthpiece cap has a first tube extending toward the storage compartment, the housing has a second tube extending toward the storage compartment, and the heating component top cap has a third tube extending toward the vaporization chamber, the first tube, the second tube, and the third tube forming an airflow channel.

7. The vaporization device according to claim 6, further comprising a seal member, wherein the heating component top cap has a fourth tube extending toward the mouthpiece cap, and the seal member is disposed between the second tube of the housing and the fourth tube.

8. The vaporization device according to claim 1, further comprising a seal member, wherein the seal member is disposed between the heating component top cap and a tube of the housing, and the hardness of the seal member is less than the hardness of the heating component top cap.

9. The vaporization device according to claim 6, wherein the maximum width of the first tube is greater than the maximum width of the second tube, and the maximum width of the second tube is greater than the maximum width of the third tube.

10. The vaporization device according to claim 1, wherein the heating component top cap has a third tube extending toward the vaporization chamber and a fourth tube extending toward an opposite direction of the vaporization chamber, an inner diameter of the third tube being less than an inner diameter of the fourth tube.

11. The vaporization device according to claim 1, wherein the heating component base has a groove, and the heating component is disposed between the groove and the heating component top cap.

12. A vaporization device, comprising:
a heating component top cap, a heating component base, and a heating component, wherein
the heating component top cap has a first part and a second part, a width of the first part being greater than a width of the second part; and
a first part of the heating component is disposed between the heating component base and the heating component top cap, and a second part of the heating component is exposed by the heating component base and the heating component top cap.

13. The vaporization device according to claim 12, further comprising a housing, wherein the housing and the heating component top cap define a storage compartment, and the heating component base and the heating component top cap define a vaporization chamber, the first part of the heating component being disposed in the vaporization chamber, and the second part of the heating component being exposed in the storage compartment.

14. The vaporization device according to claim 12, further comprising a heating wire, the heating wire being wound around the first part of the heating component.

15. The vaporization device according to claim 12, further comprising a housing, wherein an inner wall of the housing comprises a first rib and a second rib, one end of the first rib being in direct contact with the heating component top cap, and one end of the second rib being in direct contact with the heating component top cap.

16. The vaporization device according to claim 13, wherein the housing has a first tube extending toward the storage compartment, and the heating component top cap has a second tube extending toward the vaporization chamber, the first tube and the second tube forming an airflow channel.

17. The vaporization device according to claim 12, further comprising a housing and a seal member, wherein the housing has a first tube extending toward the heating component base, and the seal member is disposed between the heating component top cap and the first tube of the housing, the seal member and the heating component top cap comprising different materials.

18. The vaporization device according to claim 12, wherein a distance between the first part of the heating component top cap and the heating component is less than a distance between the second part of the heating component top cap and the heating component.

19. The vaporization device according to claim 12, further comprising a cartridge base, wherein the cartridge base comprises a first pillar structure and a second pillar structure, the first pillar structure and the second pillar structure extending into the heating component base, so that the heating component base is mechanically coupled to the cartridge base.

20. The vaporization device according to claim 16, wherein the second tube of the heating component top cap extends into the vaporization chamber.
